# EUROPEAN PATENT APPLICATION

(11) **EP 3 965 040 A1**
(43) Date of publication of application: **09.03.2022**
(21) Application number: 20194421.2
(22) Date of filing: 03.09.2020
(51) Int. Cl.: G06Q 20/40, G06Q 20/06, G06Q 20/32, G06Q 20/36

(54) **METHOD AND SYSTEM FOR THE COMPLIANT EXCHANGE OF DIGITAL TOKEN-BASED CURRENCY**

(71) Applicant: SICPA HOLDING SA, 1008 Prilly (CH)
(72) Inventor: SUICHIES, Bart, 1806 St Legier La Chiesaz (CH); NICOLOV, Kalin, 1260 Nyon (CH)
(74) Representative: GatesIP

(57) **Abstract**

The present invention provides a method, system, and medium for the compliant exchange of digital currency. The method comprises the steps of: receiving a transaction request initiated from a first digital wallet of a first user to a second digital wallet of a second user; in response to the transaction request, a digital currency coordinator determining to adopt different level of verification based on the transaction amount included in the transaction request, wherein said different level of verification includes: if the transaction amount is lower than a predetermined threshold, performing a verification of whether the transaction fulfills the transaction compliancy requirements; otherwise, performing a verification of whether the transaction fulfill the transaction compliancy requirements and a verification of the identity of the first user or both the first user and the second user; and after said verification is passed, the digital currency coordinator sending the transaction request to a transaction processing system for processing the transaction request.

## Description

### TECHNICAL FIELD

Aspects of the disclosure are related to the compliant exchange of digital currency, and in particular to the compliant exchange of digital currency in a token-based system.

### TECHNICAL BACKGROUND

Recently many researches are conducted concerning Central Bank Digital Currency (CBDC) and the related transactions, which have led to a definition of the fundamental principles of central bank issued digital cash.

One of these fundamental principles is the integration of identity credentials and digital tokens, in order to ensure full compliance on topics such as Know-Your-Customer (KYC), Anti-Money Laundering (AML) and Counter Terrorist Financing (CTF), whilst offering guarantees for privacy of transactions and GDPR compliance. Based on signals from several Central Banks this is a validated requirement for any form of CBDC. The prevailing view is that account-based systems for CBDC offer the best guarantees for compliance, while token-based systems offer the best guarantees for privacy. Nevertheless, there is no system out there today which offers token-based functionality with the compliance benefits of identifying parties involved in a transaction.

To combat illegal activities in the financial sector, such as money laundering, financing of terrorism, or drug trafficking, governments and international bodies have set several procedures and regulations (e.g. AML, KYC, CTF). One key element of these regulations is based on identity verification.

This identity verification is difficult to achieve in token-based systems, since the token-based systems are by design anonymous. In the physical domain, transactions with tokens (i.e., banknotes or coins) are generally limited by their physical manifestation. This is not the case with digital tokens, that could potentially be spent between anonymous parties in unlimited amounts in a matter of seconds.

For this reason, many digital currency systems are not token-based, but account-based. This means that the identity information of the owner of the account is known, and all transactions can be tracked. While an account-based system has clear benefits in terms of compliance, it has a major drawback in terms of (financial) privacy, and as such is not ideal for public money like Central Bank issued digital cash.

There is a need for transaction system which can solve or obviate at least one of the above problems.

### SUMMARY OF THE INVENTION

The present invention was made in view of the situation described above. An object of the present invention is to combine digital identity credentials with a token-based system to enable compliant transactions whilst retaining the maximum amount of privacy for the parties involved in the transaction based on the transaction amount.

By combining digital identity credentials with a token-based system, the present invention could achieve two following core advantages that are critical to the adoption and use of digital cash in regulated environments. Firstly, it balances provable regulatory compliance for digital cash transactions whilst retaining privacy for the individual parties involved in these transactions. Secondly, it introduces a regulated limitation for spending large amounts of digital cash at once, mimicking the physical manifestation of cash.

In a first aspect of the present invention, a computer implemented method for the compliant exchange of digital token-based currency is provided, which provides varying degrees of privacy for the transaction parties based on the transaction amount, wherein the method comprises the steps of:
receiving a transaction request initiated from a first digital wallet of a first user to a second digital wallet of a second user, the transaction request including at least the transaction amount, payment addresses of the (digital wallets of the) transaction parties, and type of the parties;
in response to the transaction request, a digital currency coordinator determining to adopt different level of verification based on the transaction amount, payment addresses of the (digital wallets of the) transaction parties, and type of the parties, wherein said different level of verification includes:
   if the transaction amount is lower than a predetermined threshold, performing a verification of whether the transaction fulfills the transaction compliancy requirements; or
   if the transaction amount is equal to or higher than the predetermined threshold, performing a verification of whether the transaction fulfill the transaction compliancy requirements and a verification of the identity of the first user or both the first user and the second user; and
   after said different level of verification is passed, the digital currency coordinator sending the transaction request to a transaction processing system, the transaction processing system processing the transaction request to transfer the currency of the transaction amount from the second digital wallet of the second user to the first digital wallet of the first user, and the balances of the first digital wallet and the second digital wallet are updated when the transaction is finished.

In an embodiment of the above method according to the present invention, wherein the digital currency coordinator comprises:
a transaction coordinator, which is coupled to the transaction processing system and is configured to check the transaction amount and verify whether the compliancy requirements have been fulfilled; and
an identity coordinator, which is coupled to an identity system to perform the verification of the identity of the first user or both the first user and the second user.

In an embodiment of the above method according to the present invention, wherein the method further comprises the following onboarding step for each of the transaction parties before the transaction:
establishing a connection between the digital wallet of each of the transaction parties and the digital currency coordinator before the transaction;
downloading the transaction compliancy requirements from the transaction coordinator to the digital wallet of each of the users; and
optionally, creating a cryptographic seed key for the transaction party, wherein the cryptographic seed key is stored in the digital wallet of the transaction party for creating a payment address for each digital currency transaction.

In an embodiment of the above method according to the present invention, wherein said establishing connection between the digital wallet of each of the users and the digital currency coordinator comprises:
sending a connection invite from the digital wallet of one transaction party to the digital currency coordinator;
in response to the connection invite, the digital currency coordinator sending back the invite signed with a public decentralized identity of the coordinator to the digital wallet of said one transaction party;
the digital wallet of said one transaction party verifying the decentralized identity with an identify system; and
after the decentralized identity is verified by the identity system, establishing the connection between the digital wallet of each of the transaction parties and the digital currency coordinator.

In an embodiment of the above method according to the present invention, wherein the verification of the identity of the first user or both the first user and the second user comprises retrieving the verifiable identity credentials from a trusted identity provider, which includes:
establishing connection between the wallet of the first user or the second user and the trusted identity provider;
after the connection is established, sending a request for the verifiable identity credential from the digital wallet of the first user or the second user to the trusted identity provider;
the trusted identity provider offering the verifiable identity credential; and
after the verifiable identity credential being accepted by the digital wallet of the first user or the second user, the verifiable identity credential being issued and stored in the digital wallet of the first user or the second user.

In an embodiment of the above method according to the present invention, wherein the verification of the identity of the first user or both the first user and the second user further comprises:
the digital currency coordinator requesting for verification of the identity of the first user or both the first user and the second user to the identity system; and
if the verification of the identity of the first user or both the first user and the second user is successfully completed by the identity system, the identity coordinator reporting back to the digital currency coordinator and triggering the issuance of a compliance credential through the identity system to the digital wallet of the first user or the digital wallets of both the first user and the second user.

In an embodiment of the above method according to the present invention, wherein after the verification of the identity of the first user or both the first user and the second user is successfully completed by the identity coordinator through the identity system, the transaction is processed by the transaction processing system, and settlement credentials are respectively issued to the first user and the second user by the identity coordinator through the identity system .

In a second aspect of the present invention, a system for the compliant exchange of digital token-based currency is provided, which provides varying degrees of privacy for the transaction parties based on the transaction amount, the system at least comprising a digital currency coordinator and a transaction processing system, wherein,
the digital currency coordinator is configured to receive a transaction request initiated from a first digital wallet of a first user to a second digital wallet of a second user, the transaction request includes at least the transaction amount;
in response to the transaction request, the digital currency coordinator determines to adopt different level of verification based on the transaction amount, wherein said different level of verification includes:
if the transaction amount is lower than a predetermined threshold, performing a verification of whether the transaction fulfills the transaction compliancy requirements; or
if the transaction amount is equal to or higher than the predetermined threshold, performing a verification of whether the transaction fulfill the transaction compliancy requirements and a verification of the identity of the first user or both the first user and the second user; and
after said different level of verification is passed, the digital currency coordinator sends the transaction request to the transaction processing system, the transaction processing system processes the transaction request to transfer the currency of the transaction amount from the second digital wallet of the second user to the first digital wallet of the first user, and the balances of the first digital wallet and the second digital wallet are updated when the transaction is finished.

In an embodiment of the above system according to the present invention, wherein the digital currency coordinator comprises:
a transaction coordinator, which is coupled to the transaction processing system and is configured to check the transaction amount and verify whether the compliancy requirements have been fulfilled; and
an identity coordinator, which is coupled to an identity system to perform the verification of the identity of the first user or both the first user and the second user.

In an embodiment of the above system according to the present invention, wherein each of the transaction parties is performed the following onboarding step before the transaction:
establishing a connection between the digital wallet of each of the transaction parties and the digital currency coordinator before the transaction;
downloading the transaction compliancy requirements from the transaction coordinator to the digital wallet of each of the transaction parties; and
optionally, creating a cryptographic seed key for the transaction party, wherein the cryptographic seed key is stored in the digital wallet of the transaction party for creating a payment address for each digital currency transaction.

In an embodiment of the above system according to the present invention, wherein said establishing a connection between the digital wallet of each of the transaction parties and the digital currency coordinator comprises:
sending a connection invite from the digital wallet of one transaction party to the digital currency coordinator;
in response to the connection invite, the digital currency coordinator sending back the invite signed with a public decentralized identity of the coordinator to the digital wallet of said one transaction party;
the digital wallet of said one transaction party verifying the decentralized identity with an identify system; and
after the decentralized identity is verified by the identity system, establishing the connection between the digital wallet of each of the transaction parties and the digital currency coordinator.

In an embodiment of the above system according to the present invention, wherein the verification of the identity of the first user or both the first user and the second user comprises retrieving the verifiable identity credentials from a trusted identity provider, which includes:
establishing a connection between the wallet of the first user or the second user and the trusted identity provider;
after the connection is established, sending a request for the verifiable identity credential from the digital wallet of the first user or the second user to the trusted identity provider;
the trusted identity provider offering the verifiable identity credential; and
after the verifiable identity credential being accepted by the digital wallet of the first user or the second user, the verifiable identity credential being issued and stored in the digital wallet of the first user or the second user.

In an embodiment of the above system according to the present invention, wherein the verification of the identity of the first user or both the first user and the second user further comprises:
the digital currency coordinator requesting for verification of the identity of the first user or both the first user and the second user to the identity system; and
if the verification of the identity of the first user or both the first user and the second user is successfully completed by the identity system, the identity coordinator reporting back to the digital currency coordinator and then triggering the issuance of a compliance credential through the identity system the digital wallet of the first user or the digital wallets of both the first user and the second user.

In an embodiment of the above system according to the present invention, wherein after the verification of the identity of the first user or both the first user and the second user is successfully completed by the identity system, the transaction is processed by the transaction processing system, and settlement credentials are respectively issued to the first user and the second user by the identity coordinator through the identity system.

In a third aspect of the present invention, a non-transitory computer readable storage medium is provided, which comprises instructions that, when executed by a processor, cause the processor to perform the above method.

With the solution of the present invention, it is possible to balance provable regulatory compliance for digital currency transactions whilst retaining privacy for the transaction parties involved in these transactions. In addition, the present invention can also introduce a regulated limitation for spending large amounts of digital currency at one time, mimicking the physical manifestation of cash.

### BRIEF DESCRIPTION OF THE DRAWINGS

Many aspects of the present invention can be better understood with reference to the following drawings. While several implementations are described in connection with these drawings, the present invention is not limited to the implementations disclosed herein. On the contrary, the intent is to cover all alternatives, modifications, and equivalents.
Figure 1 illustrates an operational architecture of the system for the compliant exchange of digital token-based currency according to an embodiment of the present invention.
Figure 2 illustrates a flow diagram of the method for the compliant exchange of digital token-based currency according to an embodiment of the present invention.
Figure 3 illustrates an exemplary process of establishing a pairwise connection or VPN connection between two transaction parties with decentralized ID system according to an embodiment of the present invention.
Figure 4 illustrates an exemplary process of establishing a pairwise or VPN connection between a transaction party and a digital currency coordinator according to an embodiment of the present invention.
Figure 5 illustrates an exemplary process of issuing a verifiable identity credential for a transaction party according to an embodiment of the present invention.
Figure 6 illustrates an exemplary process of implementing the method for the compliant exchange of digital token-based currency according to an embodiment of the present invention.
Figure 7 illustrates another exemplary process of implementing the method for the compliant exchange of digital token-based currency according to an embodiment of the present invention.

### DETAILED DESCRIPTION

Non-restrictive and non-exhaustive embodiments of the present invention are described by way of example with reference to the accompanying figures.

Firstly, brief definitions of terms, abbreviations and concepts used throughout this application are given below.

### Terminology

Wallet: A wallet is an application specialized in the management digital assets in all their various forms: fungible, non-fungible, collectible, non-transferable, and credentials. It is the interface that individuals use to create, acquire, use, update, and delete their digital assets, whether currency tokens or digital credentials. Depending on the form factor of the wallet, it may show the balance of tokens, an overview of various digital credentials, a transaction history, payment addresses to send and/or receive funds and any other information stored by the wallet itself.

### Abbreviations

SDK: Software Development Kit is a collection of software development tools in one installable package;
API: Application Programming Interface is a computing interface which defines interactions between multiple software intermediaries;
PA: Payment Address of the party A (Citizen 1, Sender);
PB: Payment Address of the party B (Merchant PoS, Recipient);
Desc: Description of the purchased item;
DID CA: Pairwise DID from party C (CBDC) to party A;
DID CB: Pairwise DID from party C (CBDC) to party B;
Ent_type_B: Entity type of party B (e.g. Organization);
Ent_type_A: Entity type of party A (e.g. Human);
C_PUB: Public key of CBDC which is stored on the identity system;
C PRIV: Private key of CBDC C PRIV/C PUB keypair; and
ENC[C_PUB](DID CB): Encryption of DID CB with C PUB.

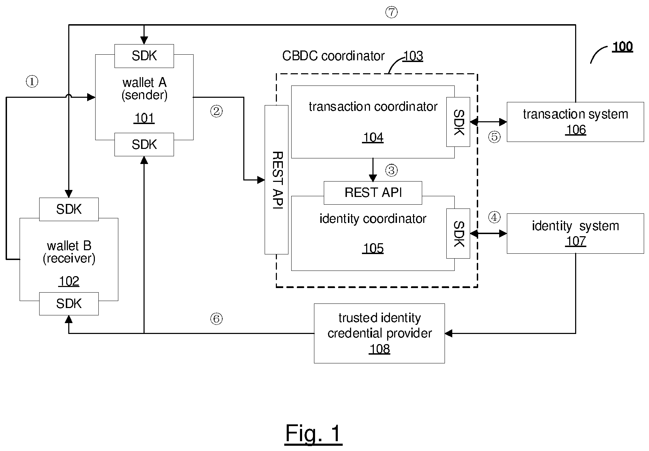

Figure 1 illustrates an operational architecture of the system 100 for the compliant exchange of digital token-based currency according to an embodiment of the present invention.

As illustrated in Figure 1, the system 100 may comprise two digital wallets 101 and 102, a digital currency coordinator (such as Central Bank Digital Currency (CBDC) coordinator) 103 comprising a transaction coordinator 104 and an identity coordinator 105, a transaction system 106, an identity system 107 and a trusted identity credential provider 108.

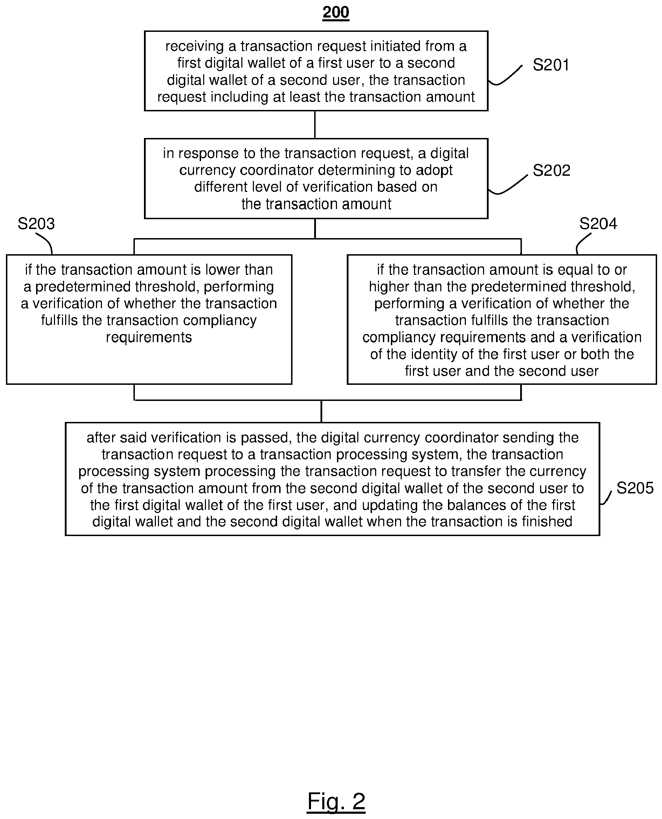

In Figure 1, digital wallet A 101 belongs to a sender (a first user, i.e. a first party) and digital wallet B 102 belongs to a receiver (a second user, i.e. a second party), both of which may hold identity information and transactional balances, and these wallets may include various SDKs for transactions. Digital wallet A 101 and digital wallet B 102 may initiate a transaction (①) by sharing a QR code with each other, which triggers a transaction request via a REST API call to the CBDC coordinator 103 ((2)). The transaction coordinator 104 of the CBDC coordinator 103 may be coupled to the transaction system 106, which is also referred to as a transaction processing system (e.g., a DLT system) via an SDK (⑤), and is configured to check the transaction amount and verify whether the compliancy requirements have been fulfilled. The transaction coordinator 104 may trigger an identity verification (IdV) for the transaction parties involved in the transaction via a REST API (③). The identity coordinator 105 of the CBDC coordinator 103 may be coupled to the identity system 107 via an SDK (④) to perform the verification of the identity of the first user or both a first user and the second user. The identity system 107 may verify verifiable identity credentials of digital wallets 101 and 102, which are stored in the digital wallets via the trusted identity credential provider 108 (e.g., a retail bank). This usually happens upon onboarding (⑥). Payment addresses of the transaction are related to the underlying transaction system 106 (⑦) and the creation of a cryptographic seed key in the digital wallet. Other compliancy requirements may trigger a further verification of an identity of a user (depending on a nature of the entity "user"). For example, a verification of a geographic location of the users, a nationality of the users, a presence of the users on an official blacklist etc. An example of official blacklist is the FATF blacklist ("Financial Action Task Force") relating to the countries considered as non-cooperative in the fight against money laundering and/or terrorist financing. In case a party is an organization or company, the compliancy requirements may further involve verifying some legal registration number etc. As explained above, a type of a user (or party) having a digital wallet may be a human or any entity like a company or an organization. Figure 2 illustrates a flow diagram of the method 200 for the compliant exchange of digital token-based currency according to an embodiment of the present invention. The method 200 provides varying degrees of privacy for the transaction parties based on the transaction amount, wherein the method comprises the steps of:
Step 201: receiving the transaction request initiated from a first digital wallet of the first user to a second digital wallet of the second user, the transaction request including at least the transaction amount, payment addresses of the users, and type of the users;
Step 202: in response to the transaction request, a digital currency coordinator determining to adopt different level of verification based on the transaction amount, payment addresses of the users, and type of users, wherein said different level of verification includes:
   Step 203: if the transaction amount is lower than a predetermined threshold, performing a verification of whether the transaction fulfills the transaction compliancy requirements; or
   Step 204: if the transaction amount is equal to or higher than the predetermined threshold, performing a verification of whether the transaction fulfill the transaction compliancy requirements and a verification of the identity of the first user or both the first user and the second user;
   Step 205: after said verification is passed, the digital currency coordinator sending the transaction request to a transaction processing system, the transaction processing system processing the transaction request to transfer the currency of the transaction amount from the second digital wallet of the second user to the first digital wallet of the first user, and the balances of the first digital wallet and the second digital wallet are updated accordingly when the transaction is finished.

In some implementations, for example, Ethereum is used as a transaction system, and the Sovrin Staging Net is used as the identity system. However, it should be noted that the transaction system and the identity system can be changed independently from the digital currency coordinator. In addition, the transaction coordinator and identity coordinator can be separated across different legal organizations in order to guarantee privacy. It should be appreciated that the verification of the identity of the first user or the second user herein should be broadly understood as including but not limited to, the verification of the identity information of the first user or the second user, and if necessary, also including the verification of the payment address of the digital wallet of the first user or the second user.

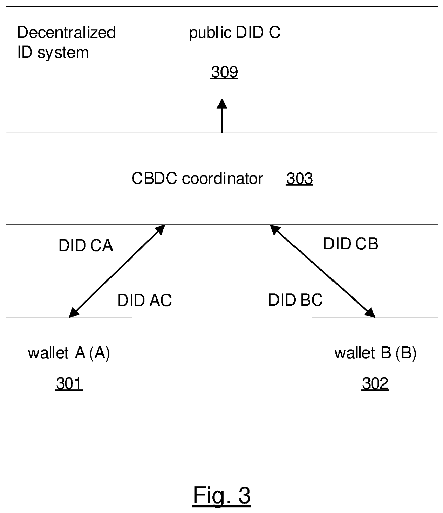

Figure 3 illustrates an exemplary process of establishing a pairwise connection or VPN connection between two transaction parties with decentralized ID system according to an embodiment of the present invention. Pairwise connections are end-to-end encrypted channels between two parties, and leverage decentralized identifiers (DIDs) with the following characteristics:
Pairwise, which means that two parties exchange identifiers directly with each other, not with a third party;
Pseudonymous, which means that each party generates a new identifier for each connection it makes, improving privacy and non-correlation; and

Off-ledger, which means that the DIDs are managed in each party's wallet, rather than on a blockchain.

When two parties exchange DIDs in order to establish an encrypted, private peer-to-peer connection, the public DID C acts as an anchor for related public/private-key material associated to it. Each party, as indicated by wallet A 301, wallet B 302 and CBDC Coordinator 303 in figure 3, holds the relevant key material associated to DID C to enable encryption and decryption of messages. Messages are being sent between parties using the DDIComm protocol (https://identity.foundation/didcomm-messaging/docs/spec/). It should be appreciated that the decentralized ID system 309 can be any system, such as the Sovrin network. As illustrated in figure 3, DID CA refers to a pairwise connection between the DID C under the control of the CBDC coordinator 303 and the DID A under the control of wallet A 301. DID AC refers to a pairwise connection between the DID A under control of wallet A and DID C under control of CBDC coordinator C, DID CB refers to a pairwise connection between the DID C under control of CBDC coordinator 303 and the DID under the control of wallet B 302, and DID BC refers to the pairwise DID connection between the DID B under control of wallet B 302 and the DID under control of CBDC coordinator 303.

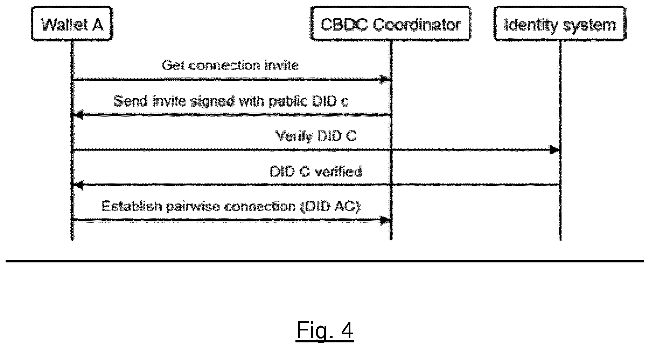

Figure 4 illustrates an exemplary process of establishing a pairwise connection or VPN connection between a transaction party and a digital currency coordinator according to an embodiment of the present invention, which will be described in detail below.

First, a connection invite may be sent from the digital wallet A 401 of one transaction party to the digital currency coordinator (CBDC coordinator) 403. In response to the connection invite, the digital currency coordinator 403 sends back the invite signed with a public decentralized identity of the coordinator to the digital wallet A 401. The digital wallet A 401 verifies the decentralized identity with the identify system 407. After the decentralized identity is verified by the identity system 407, the pairwise connection between the digital wallet A 401 and the digital currency coordinator 403 is established. The above steps also apply to any other digital wallet which is involved in transactions.

Establishing a pairwise connection or VPN connection is enforced at the digital wallet onboarding process, which also synchronizes the digital wallet with any specific rules with regards to compliance. The wallet onboarding process comprises the following steps: establishing a pairwise connection or VPN connection between the digital wallet of each of the transaction parties and the digital currency coordinator before the transaction; downloading the transaction compliancy requirements from the transaction coordinator to the digital wallet of each of the transaction parties; and, optionally creating a cryptographic seed key for the transaction party, wherein the cryptographic seed key is stored in the digital wallet of the transaction party for creating a payment address for each digital currency transaction.

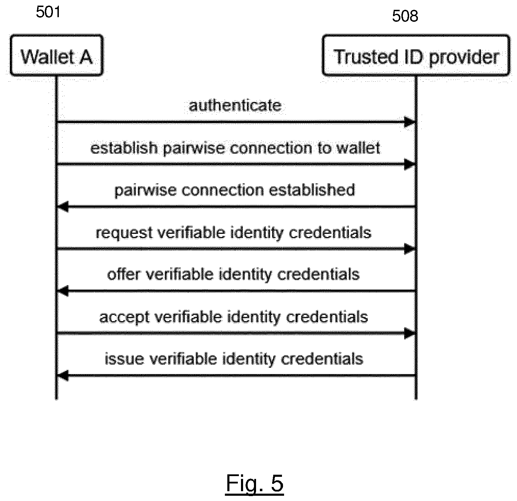

Figure 5 illustrates an exemplary process of issuing a verifiable identity credential for a transaction party according to an embodiment of the present invention. By utilizing the bank's normal authentication system, the transaction party (e.g., the first user or the second user) authenticates to the trusted ID provider 508, e.g. a regulated bank, and establishes a pairwise connection between his digital wallet (a digital wallet of the first user or the second user) such as wallet A 501 and the trusted identity provider. After the pairwise connection is established, a request for the verifiable identity credential is sent from the digital wallet A 501 of the transaction party to the trusted identity provider 508. The trusted identity provider 508 offers the verifiable identity credential to the transaction party. After the verifiable identity credential is accepted by the wallet of the transaction party, the verifiable identity credential is issued and stored in the digital wallet 501.

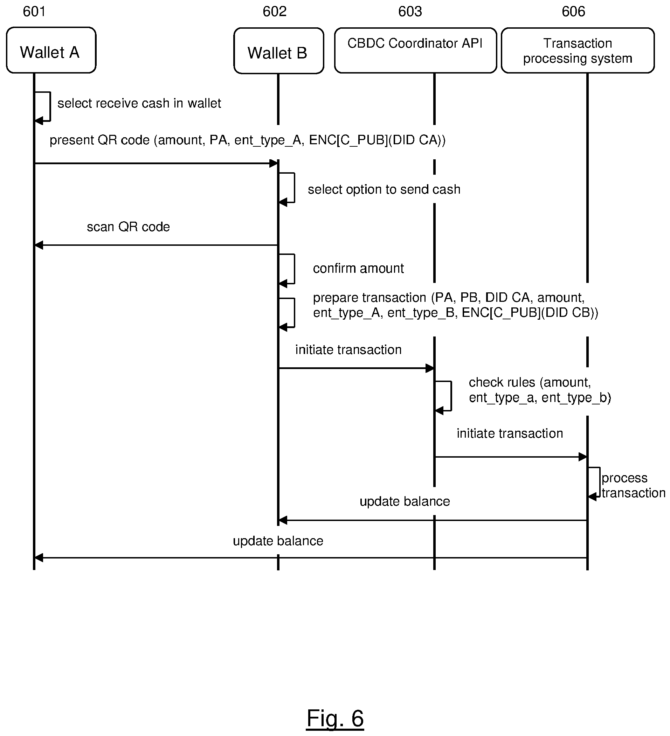

Figure 6 illustrates an exemplary process of implementing the method for the compliant exchange of digital token-based currency according to an embodiment of the present invention. In this implementation, it concerns a peer-to-peer anonymous transaction scenario that has a low transactional amount, below a predetermined threshold (e.g., $100 or other amount) that would require some type of identity verification. As illustrated in Figure 6, party A (e.g. the first user) who owns wallet A 601 may select receiving cash in his wallet to initiate a transaction request, then a QR code from wallet A 601, which includes information (e.g., payment address of party A (PA), entity type of party A (ent_type_A), and encryption of DID CA with C_PUB (ENC[C_PUB](DID CA)), etc.), is presented, and at this time a required transactional amount may be entered. Next, party B (e.g. the second user) who owns wallet B 602 may select an option to send cash, scan the QR code, confirm the transactional amount, and prepare the transaction which includes information, such as payment address of party A (PA), payment address of party B (PB), pairwise DID from party C (CBDC) to party A (DID CA), transactional amount, entity type of party A (ent_type_A), entity type of party B (ent type B), and encryption of DID CB with C PUB (ENC[C_PUB](DID CB)). After that, the transaction is initiated from wallet B to a CBDC coordinator 603 (e.g., via REST API) to check rules. In a next operation, the CBDC coordinator 603 checks whether the transaction meets a set of compliance rules, including checking whether the transactional amount, entity type of party A and entity type of party B meet any specific compliance rules. Here, the compliance rules are downloaded from the CBDC coordinator 603 to a wallet at the wallet onboarding process, which also synchronizes the wallet with any specific rules with regards to compliance. Once the compliance rules have been met, the CBDC coordinator 603 initiates the transaction to a transaction processing system 606 (e.g., using Ethereum as a transaction processing system) for processing the transaction between wallet A 601 and wallet B 602. When the processing is completed, the transaction processing system updates the balances of wallet A 601 and wallet B 602. When the processing is completed, the balances of wallet A 601 and wallet B 601 are updated, either through the transaction processing system or the wallet related to it.

It is appreciated that in the scenario of Figure 6, the transaction is processed immediately, without any subsequent identity verification. As such, under the circumstance of anonymous transaction, it is possible to ensure the privacy for the transaction parties.

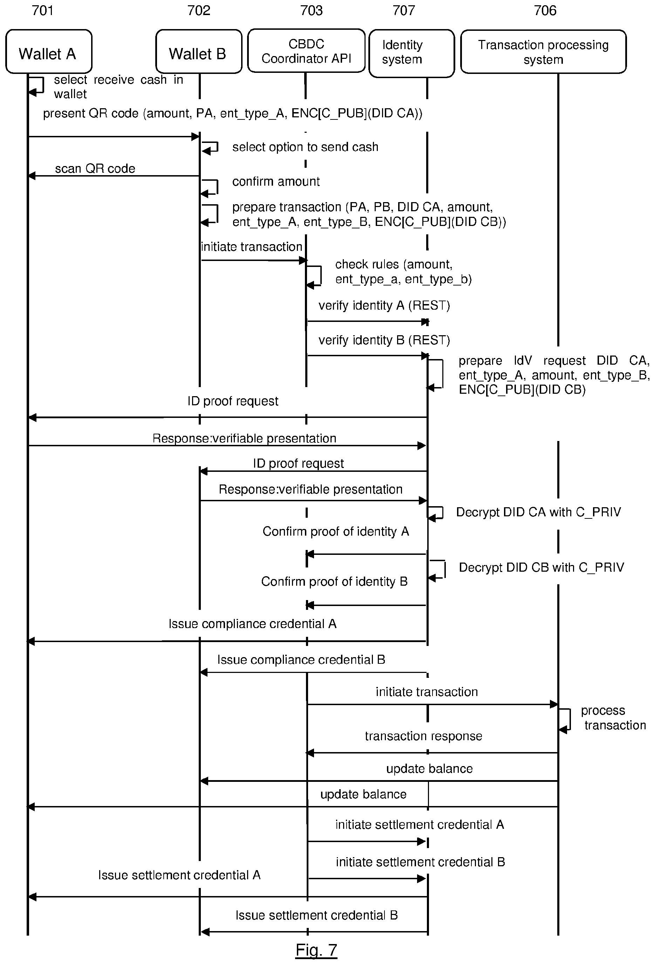

Figure 7 illustrates another exemplary process of implementing the method for the compliant exchange of digital token-based currency according to an embodiment of the present invention. In this implementation, it concerns a peer-to-peer transaction scenario that has a high transactional amount with light/full KYC (Know Your Customer) compliance requirement, above the predetermined threshold (e.g., $100 or other amount) that would require some type of identity verification. As illustrated in Figure 7, party A who owns wallet A 701 may select receiving cash in his wallet to initiate a transaction request, then a QR code from wallet A 701, which includes information (e.g., payment address of party A (PA), entity type of party A (ent_type_A), and encryption of DID CA with C_PUB (ENC[C_PUB](DID CA)), etc.), is presented, and at this time a required transactional amount may be entered. Next, party B who owns wallet B 702 may select an option to send cash, scan the QR code, confirm the transactional amount, and prepare the transaction which includes information, such as payment address of party A (PA), payment address of party B (PB), pairwise DID from party C (CBDC) to party A (DID CA), transactional amount, entity type of party A (ent_type_A), entity type of party B (ent_type_B), and encryption of DID CB with C_PUB (ENC[C_PUB](DID CB)). After that, the transaction is initiated from wallet B to a CBDC coordinator 703 (e.g., via REST API) to check rules. In a next operation, the CBDC coordinator 703 checks whether the transaction meets a set of compliance rules, including checking whether the transactional amount, entity type of party A and entity type of party B meet any specific compliance rules. Once the compliance rules have been met, the CBDC coordinator 703 triggers (e.g., by SDK) an identity verification for the parties involved in the transaction.

The identity verification is done through an identity system 707 (e.g., using Sovrin Staging Net as an identity system), as will be further discussed below. The CBDC coordinator 703 sends a request to the identity system via REST API to verify an identity of each of party A and party B. When the identity system 707 receives the request, it prepares an request for identity verification, which includes DID CA, ent_type_A, amount, ent_type_b, and ENC[C_PUB](DID CB), for ID proof request. In a next operation, the identity system 707 sends an ID proof request to each of wallet A 701 and wallet B 702, respectively, and then both wallet A 701 and wallet B 702 respond to the identity system with verifiable presentation. For example, a verified identity credential is received from a retail bank in advance. After that, for the response of wallet A 701, the identity system 707 decrypts DID CA with private key of CBDC (C PRIV), confirms proof of identity A, and then reports back to the CBDC coordinator 703; and for the response of wallet B 702, the identity system 707 decrypts DID CB with private key of CBDC (C PRIV), confirms proof of identity B, and then reports back to the CBDC coordinator 703. It should be appreciated that C_PRIV/C_PUB is a keypair of the CBDC coordinator 703, and C_PUB represents a public key of the CBDC coordinator 703, which is stored on the identity system 707 such as a decentralized ID (DID) system while C_PRIV represents a private key of the CBDC coordinator 703, which is held by the CBDC coordinator 703 itself to decrypt messages. Once the identity verification has been successfully completed, the identity system 707 issues compliance credential A to wallet A 701 and compliance credential B to wallet B 702. The compliance credential will allow the transaction parties to independently prove they are compliant with all regulations at the time of the transaction.

Once the identity verification has been completed successfully, the CBDC coordinator 703 initiates the transaction to the transaction processing system 706 (e.g., using Ethereum as a transaction processing system) for processing the transaction between wallet A 701 and wallet B 702. When the transaction is processed, the transaction processing system 706 makes a transaction response to the CBDC coordinator 703. When the processing is completed, the transaction processing system 706 updates the balances of wallet A 701 and wallet B 702.

In some embodiments, for example, the transaction has a higher transactional amount (e.g., $200), and the entity type of one transaction party is a merchant or the like. In such cases, a settlement credential may be required. As illustrated in Figure 7, the CBDC coordinator 703 may initiate a request for settlement credential to the identity system for wallet A 701 and wallet B 702. After receiving the request, the identity system 707 issues settlement credential A and settlement credential B to wallet A 701 and wallet B 702, respectively. This guarantees the transaction parties that the CBDC coordinator 703 will settle the transaction. This adds a benefit of being able to quickly finish any transaction for the transaction parties, asynchronously on the system that is used to ultimately settle the transaction.

Depending on the transaction amount, such as $0-$100, $101-$200, $201-$10,000, >$10,000, different levels of privacy may be provided. In an embodiment with the transaction amount of e.g. $101-$200, light KYC may be required, and identity information is provided for identity verification. In another embodiment with the transaction amount of e.g. $201-$10,000, full KYC may be required, and identity and address information are provided for identity verification. In yet another embodiment with the transaction amount of e.g. >$10,000, the transaction is not allowed and no identity verification is triggered.

There are multiple cases for the identity verification. As an example, anonymous transfer will directly be enqueued for processing without identity verification. As another example, identity-based transfers will first await the identity confirmation from CBDC identity system. When CBDC coordinator receives the confirmation, it will enqueue the transfer for processing (On-chain broadcast). When the transfer is broadcast successfully, it is switched to the processed status. When the transfer is detected on chain (picked up by an indexer), the status is changed to broadcast. After confirmation from the payment system, the status is changed to confirmed. It should be appreciated that any transfer may fail for various reason at multiple stages, if it happens, the transfer status will be failed and a failure reason will be provided.

Those ordinarily skilled in the art would understand that all or some of the steps of the method of the present invention can be completed by relevant hardware, such as a computer device or processor, which is directed by a computer program, and the computer program may be stored in a non-transitory computer readable storage medium, and when executed, implements the steps of the method of the present invention. Any reference to a memory, storage, database or other medium herein may include a non-volatile and/or volatile memory, depending on the circumstances. Examples of a non-volatile memory include read-only memory (ROM), programmable ROM (PROM), electrically programmable ROM (EPROM), electrically erasable programmable ROM (EEPROM), flash memory, magnetic tape, soft disk, magneto-optical data storage device, optical data storage device, hard disk, solid state disk, etc. Examples of a volatile memory include random access memory (RAM), external cache, etc.

Various technical features described above may be combined arbitrarily. Although not all possible combinations of these technical features are described, any combination of these technical features should be deemed to be covered by the present specification provided that there is no conflict for such a combination.

While the present invention has been described in connection with examples, those skilled in the art would understand that the above description and figures are only illustrative rather than restrictive, and the present invention is not limited to the disclosed examples. Various modifications and variations are possible without departing from the spirit of the present invention.

## Claims

1. A computer implemented method for the compliant exchange of digital token-based currency, which provides varying degrees of privacy for the transaction parties based on the transaction amount, wherein the method comprises the steps of:
receiving a transaction request initiated from a first digital wallet of a first user to a second digital wallet of a second user, the transaction request including at least the transaction amount, payment addresses of the transaction parties , and type of the parties;
in response to the transaction request, a digital currency coordinator determining to adopt different level of verification based on the transaction amount and payment addresses of the transaction parties, and type of the parties, wherein said different level of verification includes:
if the transaction amount is lower than a predetermined threshold, performing a verification of whether the transaction fulfills the transaction compliancy requirements; or
if the transaction amount is equal to or higher than the predetermined threshold, performing a verification of whether the transaction fulfill the transaction compliancy requirements and a verification of the identity of the first user or both the first user and the second user; and
after said different level of verification is passed, the digital currency coordinator sending the transaction request to a transaction processing system, the transaction processing system processing the transaction request to transfer the currency of the transaction amount from the second digital wallet of the second user to the first digital wallet of the first user, and the balances of the first digital wallet and the second digital wallet when the transaction is finished are updated accordingly.

2. The method according to claim 1, wherein the digital currency coordinator comprises:
a transaction coordinator, which is coupled to the transaction processing system and is configured to check the transaction amount and verify whether the compliancy requirements have been fulfilled; and
an identity coordinator, which is coupled to an identity system to perform the verification of the identity of the first user or both the first user and the second user.

3. The method according to claim 2, wherein the method further comprises the following onboarding step for each of the transaction parties before the transaction:
establishing a connection between the digital wallet of each of the transaction parties and the digital currency coordinator before the transaction;
downloading the transaction compliancy requirements from the transaction coordinator to the digital wallet of each of the transaction parties; and
optionally, creating a cryptographic seed key for the transaction party, wherein the cryptographic seed key is stored in the digital wallet of the transaction party for creating a payment address for each digital currency transaction.

4. The method according to claim 3, wherein said establishing a connection between the digital wallet of each of the transaction parties and the digital currency coordinator comprises:
sending a connection invite from the digital wallet of one transaction party to the digital currency coordinator;
in response to the connection invite, the digital currency coordinator sending back the invite signed with a public decentralized identity of the coordinator to the digital wallet of said one transaction party;
the digital wallet of said one transaction party verifying the decentralized identity with an identify system; and
after the decentralized identity is verified by the identity system, establishing the connection between the digital wallet of each of the transaction parties and the digital currency coordinator.

5. The method according to any of claims 1-4, wherein the verification of the identity of the first user or both the first user and the second user comprises retrieving the verifiable identity credentials from a trusted identity provider, which includes:
establishing a connection between the wallet of the first user or the second user and the trusted identity provider;
after the connection is established, sending a request for the verifiable identity credential from the digital wallet of the first user or the second user to the trusted identity provider;
the trusted identity provider offering the verifiable identity credential; and
after the verifiable identity credential being accepted by the digital wallet of the first user or the second user, the verifiable identity credential being issued and stored in the wallet of the first user or the second user.

6. The method according to any of claims 1-4, wherein the verification of the identity of the first user or both the first user and the second user further comprises:
the digital currency coordinator requesting for verification of the identity of the first user or both the first user and the second user to the identity system; and
if the verification of the identity of the first user or both the first user and the second user is successfully completed by the identity system, the identity coordinator reporting back to the digital currency coordinator and then triggering the issuance of a compliance credential through the identity system to the digital wallet of the first user or the digital wallets of both the first user and the second user.

7. The method according to any of claims 1-4, wherein after the verification of the identity of the first user or both the first user and the second user is successfully completed by the identity system, the transaction is processed by the transaction processing system, and settlement credentials are respectively issued to the digital wallets of the first user and the second user by the identity coordinator through the identity system.

8. A system for the compliant exchange of digital token-based currency, which provides varying degrees of privacy for the transaction parties based on the transaction amount, the system at least comprising a digital currency coordinator and a transaction processing system, wherein,
the digital currency coordinator is configured to receive a transaction request initiated from a first digital wallet of a first user to a second digital wallet of a second user, and the transaction request includes at least the transaction amount, payment addresses of the transaction parties , and type of the parties;
in response to the transaction request, the digital currency coordinator determines to adopt different level of verification based on the transaction amount, wherein said different level of verification includes:
if the transaction amount is lower than a predetermined threshold, performing a verification of whether the transaction fulfills the transaction compliancy requirements; or
if the transaction amount is equal to or higher than the predetermined threshold, performing a verification of whether the transaction fulfill the transaction compliancy requirements and a verification of the identity of the first user or both the first user and the second user; and
after said different level of verification is passed, the digital currency coordinator sends the transaction request to the transaction processing system, the transaction processing system processes the transaction request to transfer the currency of the transaction amount from the second digital wallet of the second user to the first digital wallet of the first user, and the balances of the first digital wallet and the second digital wallet are updated accordingly when the transaction is finished.

9. The system according to claim 8, wherein the digital currency coordinator comprises:
a transaction coordinator, which is coupled to the transaction processing system and is configured to check the transaction amount and verify whether the compliancy requirements have been fulfilled; and
an identity coordinator, which is coupled to an identity system to perform the verification of the identity of the first user or both the first user and the second user.

10. The system according to claim 9, wherein each of the transaction parties is performed the following onboarding step before the transaction:
establishing a connection between the digital wallet of each of the transaction parties and the digital currency coordinator before the transaction;
downloading the transaction compliancy requirements from the transaction coordinator to the digital wallet of each of the transaction parties; and
creating a cryptographic seed key for the transaction party, wherein the cryptographic seed key is stored in the digital wallet of the transaction party for creating a payment address for each digital currency transaction.

11. The system according to claim 10, wherein said establishing a connection between the digital wallet of each of the transaction parties and the digital currency coordinator comprises:
sending a connection invite from the digital wallet of one transaction party to the digital currency coordinator;
in response to the connection invite, the digital currency coordinator sending back the invite signed with a public decentralized identity of the coordinator to the digital wallet of said one transaction party;
the digital wallet of said one transaction party verifying the decentralized identity with an identify system; and
after the decentralized identity is verified by the identity system, establishing the connection between the digital wallet of each of the transaction parties and the digital currency coordinator.

12. The system according to any of claims 8-11, wherein the verification of the identity of the first user or both the first user and the second user comprises retrieving the verifiable identity credentials from a trusted identity provider, which includes:
establishing a connection between the wallet of the first user or the second user and the trusted identity provider;
after the connection is established, sending a request for the verifiable identity credentials from the digital wallet of the first user or the second user to the trusted identity provider;
the trusted identity provider offering the verifiable identity credential; and
after the verifiable identity credential being accepted by the digital wallet of the first user or the second user, the verifiable identity credential being issued and stored in the digital wallet of the first user or the second user.

13. The system according to any of claims 8-11, wherein the verification of the identity of the first user or both the first user and the second user further comprises:
the digital currency coordinator requesting for verification of the identity of the first user or both the first user and the second user to the identity system; and
if the verification of the identity of the first user or both the first user and the second user is successfully completed by the identity system, the identity coordinator reporting back to the digital currency coordinator and then triggering the issuance of a compliance credential through the identity system to the digital wallet of the first user or the digital wallets of both the first user and the second user.

14. The system according to any of claims 8-11, wherein after the verification of the identity of the first user or both the first user and the second user is successfully completed by the identity system, the transaction is processed by the transaction processing system, and settlement credentials are respectively issued to the first user and the second user by the identity coordinator through the identity system.

15. A non-transitory computer readable storage medium, comprising instructions that, when executed by a processor, cause the processor to perform the method of claims 1-7.
